# FASCICULE DE BREVET EUROPEEN

(11) **EP 3 414 158 B1**
(45) Date de publication et mention de la délivrance du brevet: **22.01.2020**
(21) Numéro de dépôt: 17707384.8
(22) Date de dépôt: 07.02.2017
(51) Int. Cl.: B64C 27/12

(54) **CHAÎNE MOTRICE**
ANTRIEBSSTRANG
DRIVE TRAIN

(30) Priorité: 08.02.2016 FR 1650976
(43) Date de publication de la demande: 19.12.2018
(73) Titulaire: Safran Transmission Systems, 92700 Colombes (FR)
(72) Inventeur: DE DREUILLE DE LONGEVILLE, Thomas Marie Joseph, 77550 MOISSY-CRAMAYEL (FR); LAISNEZ, Frédéric Nicolas François, 77550 MOISSY-CRAMAYEL (FR)
(74) Mandataire: Regimbeau
(86) Numéro de dépôt international: PCT/FR2017/050272
(87) Numéro de publication internationale: WO 2017/137690

(56) Documents cités:
- EP-A1- 2 327 625
- EP-A2- 0 282 784
- FR-A1- 2 756 542
- US-B1- 6 302 356

## Description

### DOMAINE TECHNIQUE GENERAL

La présente invention concerne une chaîne motrice pour hélicoptère et un hélicoptère équipé de cette chaîne.

### ETAT DE L'ART

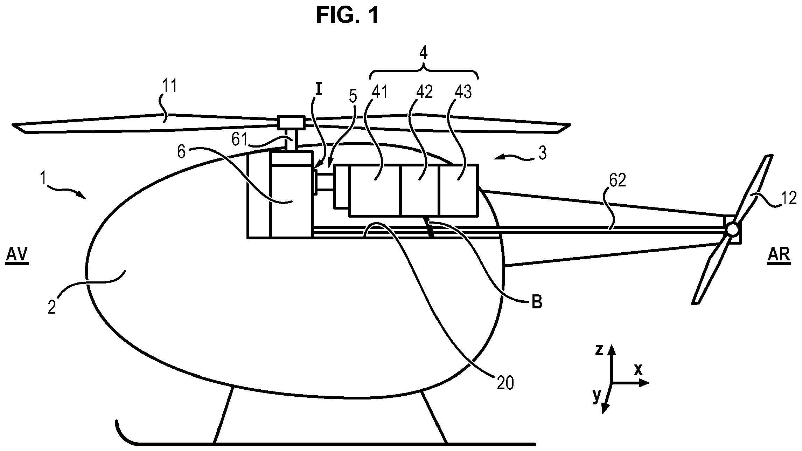

En se reportant au schéma de la figure 1 jointe, on peut voir un hélicoptère à au moins un moteur, qui comprend une cellule 2 et une chaîne motrice 3.

L'hélicoptère 1 est équipé d'un rotor principal 11, pour sa sustentation et sa propulsion et d'un rotor de queue 12 anti-couple.

La chaîne motrice 3 comprend au moins un moteur 4, apte à fournir une puissance mécanique, un réducteur 5 et une boite de transmission principale 6 dont la fonction est de transmettre la puissance de ce moteur 4 aux deux rotors, afin d'entrainer ceux-ci en rotation. La mise en rotation du rotor principal 11 et du rotor de queue 12 s'effectue par deux arbres, respectivement référencés 61 et 62.

Dans l'exemple représenté sur la figure 1, le moteur 4 comprend un compresseur 41, une chambre de combustion 42 et des turbines 43.

Le moteur 4 pourrait également être un moteur à combustion interne ou un moteur électrique.

Le réducteur 5 comprend une série d'engrenages qui réduisent la vitesse de rotation de l'arbre moteur du moteur 4. L'arbre de sortie du réducteur 5 est couplé à l'arbre d'entrée de la boite de transmission principale 6 de façon à lui transmettre le couple moteur.

Dans la suite de la description et des revendications, les termes "avant" et "arrière" sont à prendre en considération par rapport à l'avant AV et à l'arrière AR de l'hélicoptère 1.

Le réducteur 5 est logé à l'intérieur d'un carter de réducteur qui présente généralement deux parties, à savoir un "carter avant", de plus faibles dimensions et un "carter arrière". Le carter avant est lui-même fixé à la boite de transmission principale 6.

Le réducteur 5 a donc non seulement une fonction de transmission de puissance mécanique mais également une fonction de maintien structurel du moteur 4 par rapport à la cellule 2 de l'hélicoptère.

Dans l'état de l'art, la suspension du moteur 4 et du réducteur 5 de l'hélicoptère 1 est réalisée en deux points, à savoir :
- à l'avant, au niveau de l'interface I entre le carter avant du réducteur 5 et la boite de transmission principale 6, de façon à bloquer quatre degrés de liberté, à savoir les translations (Tx, Ty et Tz) selon les axes x, y et z et la rotation Mx autour de l'axe x, et
- à l'arrière, par deux biellettes B de suspension arrière radiales par rapport à l'axe de rotation du moteur, qui relient le moteur 4 au plancher 20 du moteur , de façon à bloquer deux degrés de liberté, à savoir les translations Ty et Tz selon les axes y et z. On notera que seule l'une des biellettes B est visible sur la figure 1.

Le moteur 4 est ainsi monté de façon isostatique sur l'hélicoptère 1.

Par ailleurs, les normes de sécurité imposent que le moteur 4 soit maintenu solidaire de l'hélicoptère 1 et de la cellule 2 de celui-ci, en toute situation, c'est-à-dire pendant le fonctionnement normal de l'hélicoptère, en situations de charges limites, (par exemple lors d'un atterrissage dur) ou en situations de charges ultimes.

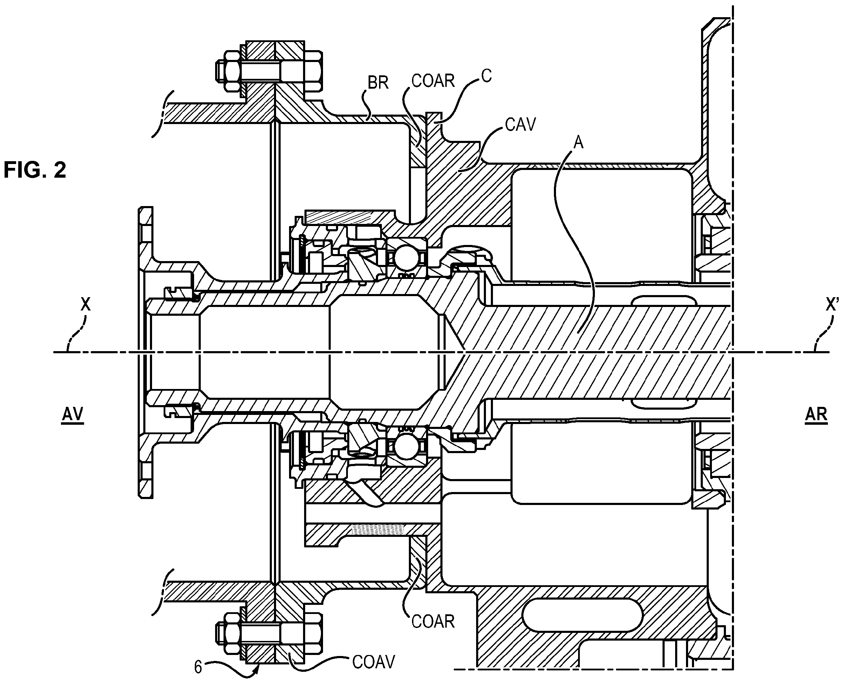

Une solution connue de l'état de la technique apparait sur la figure 2 jointe, qui représente une vue en coupe longitudinale de l'extrémité avant du carter avant du réducteur. Ce carter avant conforme à l'état de la technique est référencé CAV.

Sur cette figure, on peut voir l'arbre de sortie A du réducteur de l'état de la technique, d'axe longitudinal X-X'. Il est logé dans le carter avant CAV.

Une bride BR ayant pour fonction d'attacher le moteur est intercalée entre la boite de transmission principale 6 et une collerette annulaire C faisant saillie vers l'extérieur depuis le carter avant CAV.

Plus précisément, cette bride BR présente la forme d'un manchon annulaire, dont le bord avant est replié vers l'extérieur de façon à former une collerette avant COAV et dont le bord arrière est replié vers l'intérieur de façon à former une collerette arrière COAR.

Cette bride BR est montée coaxialement à l'axe longitudinal X-X', de façon que sa collerette arrière COAR soit fixée, par exemple visée, à la collerette annulaire C du carter avant CAV et que sa collerette avant COAV soit fixée, par exemple visée, à la paroi de la boite de transmission principale 6.

Cette bride BR est considérée comme un composant critique. Elle se présente donc sous la forme d'une pièce massive, réalisée en acier et surdimensionnée de façon à améliorer sa résistance mécanique.

Le respect de ces critères a un impact néfaste sur la masse de la bride et sur son coût.

On connaît d'après les documents FR 2 756 542 et EP 2 237 625 des chaînes motrices d'hélicoptères qui comprennent des tubes de torsion. On connaît également d'après le document US 6 302 356 une chaîne motrice d'hélicoptère qui comprend un réducteur et d'après le document EP 0 282 784, une installation de turbine à gaz pour hélicoptère qui comprend également un réducteur.

Toutefois, aucun de ces quatre documents ne divulgue un support redondant entre la boîte de transmission principale et le tube ou le réducteur respectivement.

### PRESENTATION DE L'INVENTION

L'invention a pour objectif de maintenir le moteur solidaire de l'hélicoptère, plus précisément de la boite de transmission principale, en cas de rupture du carter avant du réducteur, et ce, tout en évitant les inconvénients connus de l'état de la technique.

A cet effet, l'invention concerne une chaine motrice pour hélicoptère, qui comprend au moins un moteur apte à fournir une puissance mécanique, un réducteur et une boite de transmission principale destinée à entrainer en rotation le ou les rotors dudit hélicoptère, le réducteur comprenant un arbre de sortie, entrainé en rotation par ledit moteur et accouplé en rotation avec l'arbre d'entrée de ladite boite de transmission principale, le réducteur étant logé dans un carter en deux parties assemblées, dites "carter avant" et "carter arrière", ledit arbre de sortie étant supporté et guidé en rotation par plusieurs paliers à roulements montés dans lesdits carters.

Conformément à l'invention, cette chaîne motrice comprend un support dit « redondant », ce support redondant est disposé autour de l'arbre de sortie et entre une paroi de ladite boite de transmission principale et l'extrémité avant du carter avant, et ce support redondant est configuré, dimensionné et fixé à ladite paroi de la boite de transmission principale et à l'extrémité avant du carter avant, de façon à créer, en cas de rupture dudit carter avant, un chemin secondaire de reprises des efforts, passant par ce support redondant, par l'arbre de sortie du réducteur et par lesdits paliers à roulement.

Grâce à ces caractéristiques de l'invention, le support redondant ne reprend aucun effort lorsque le carter avant est en bon état. En revanche, en cas de rupture du carter avant, ce support redondant crée un chemin secondaire de reprise des efforts existants à l'interface carter avant/boite de transmission principale, et transmet ces efforts au reste de la structure notamment via l'arbre de sortie du réducteur.

On créé ainsi un chemin secondaire de reprise des efforts de maintien de la chaîne motrice sur l'hélicoptère, en détournant la fonction originelle de l'arbre de sortie, et des différents paliers à roulement.

Selon d'autres caractéristiques avantageuses et non limitatives de l'invention, prises seules ou en combinaison :
- le support redondant comprend une partie mâle et une partie femelle configurées pour pouvoir être assemblées, la partie femelle étant munie d'une ouverture centrale bordée par une couronne intérieure, cette partie femelle étant disposée autour de l'arbre de sortie de façon que ce dernier traverse ladite ouverture centrale, cette partie femelle étant fixée à sa périphérie à ladite paroi de la boite de transmission principale et à l'extrémité avant du carter avant, la partie mâle étant disposée autour de l'arbre de sortie (50) du réducteur et étant insérée dans l'ouverture centrale de la partie femelle, les parties mâle et femelle du support redondant et le carter avant étant configurés et dimensionnés de sorte que lorsque la partie mâle est fixée au carter avant à l'aide de vis de fixation traversant ladite partie femelle, elle soit en butée contre la bague extérieure de l'un des paliers à roulement dit « palier avant », et à ce qu'il existe un premier jeu fonctionnel entre la partie mâle et la partie femelle du support redondant et un second jeu fonctionnel entre la partie femelle et ledit carter avant ;
- le carter avant est muni d'un logement de réception dudit arbre de sortie, ce logement étant bordé à son extrémité avant par un bord annulaire avant percé d'orifices taraudés, la partie mâle du support redondant comprend un manchon tubulaire qui se prolonge à son extrémité avant par une collerette périphérique, dite "collerette avant", percée de plusieurs orifices de fixation, la couronne intérieure de la partie femelle est munie d'orifices de fixation, la partie mâle du support redondant est disposée de façon que l'arbre de sortie du réducteur traverse le passage central de son manchon tubulaire et que ce dernier traverse l'ouverture centrale du support redondant et soit logé en partie dans le logement de réception du carter avant, et ladite partie mâle est fixée au carter avant à l'aide de vis de fixation traversant les orifices de fixation de la partie mâle, les orifices de fixation ménagés dans la couronne intérieure et les orifices taraudés du carter avant ;

- un pignon d'engrenage est emmanché sur l'arbre de sortie qui l'entraine en rotation, ce pignon d'engrenage est logé en partie dans le carter avant et en partie dans le carter arrière, ledit pignon d'engrenage et ledit arbre de sortie sont supportés et guidés en rotation par un palier à roulements, dit "médian", monté dans le carter avant et par un palier à roulements, dit "arrière", monté dans le carter arrière et en cas de rupture du carter avant, le chemin secondaire de reprise des efforts passe par le support redondant, l'arbre de sortie et lesdits paliers à roulements ;
- le support redondant comprend une partie femelle qui est de forme annulaire et qui comprend une couronne extérieure périphérique, percée d'une première série d'orifices de fixation, le carter avant comprend une collerette avant avec une partie annulaire radiale plane percée de premiers orifices de fixation, et la partie femelle du support redondant est fixée par vissage à ladite partie annulaire radiale plane de la collerette avant et à la paroi de la boite de transmission principale, à l'aide de vis et d'écrous, lesdites vis traversant la paroi de la boite de transmission principale, lesdits premiers orifices de fixation de la couronne extérieure de la partie femelle et lesdits premiers orifices de fixation de la partie annulaire radiale plane de la collerette avant du carter avant ;
- la couronne intérieure et la couronne extérieure de la partie femelle du support redondant sont planes, s'étendent dans deux plans parallèles distincts et sont jointes l'une à l'autre par une partie intermédiaire annulaire inclinée vers l'intérieur de l'ouverture centrale de ladite partie femelle ;
- la partie intermédiaire annulaire inclinée de ladite partie femelle est munie d'une ouverture de drainage d'huile ;
- la couronne extérieure de la partie femelle du support redondant est munie de seconds orifices de fixation permettant le passage de vis de fixation sur la collerette avant du carter avant ;
- la partie mâle du support redondant est munie intérieurement d'un joint tournant dont la bague fixe est fixée à l'intérieur du passage central de la partie mâle et dont la bague tournante est solidaire en rotation de l'arbre de sortie du réducteur ;
- l'arbre de sortie du réducteur est muni d'un manchon de prise de mouvement, emmanché autour de l'extrémité libre de cet arbre de sortie et la bague tournante du joint tournant est montée entre la bague intérieure du palier avant et l'extrémité arrière dudit manchon de prise de mouvement ;
- l'extrémité arrière du manchon tubulaire de la partie mâle est percée d'une pluralité d'orifices de drainage qui se trouvent en regard de la bague tournante du joint tournant lorsque la partie mâle est fixée sur le carter avant.

L'invention concerne également un hélicoptère équipé de la chaîne motrice précitée.

### PRESENTATION DES FIGURES

D'autres caractéristiques et avantages de l'invention apparaîtront de la description qui va maintenant en être faite, en référence aux dessins annexés, qui en représentent, à titre indicatif mais non limitatif, un mode de réalisation possible.

Sur ces dessins :
- La figure 1 est un schéma représentant un hélicoptère muni d'une chaîne motrice,
- la figure 2 est une vue en coupe longitudinale de l'extrémité avant du réducteur d'une chaîne motrice pour hélicoptère selon un état de la technique,
- la figure 3 est une vue éclatée, en perspective, de l'extrémité avant du réducteur de la chaîne motrice conforme à l'invention, équipée d'un support redondant,
- la figure 4 est une vue en coupe longitudinale, à une échelle agrandie, d'une partie du réducteur de la figure 3, prise selon le plan de coupe P4, matérialisé par la ligne IV-IV sur la figure 3, les pièces étant représentées à l'état assemblé, et
- la figure 5 est une vue en coupe longitudinale d'une partie du réducteur de la chaîne motrice conforme à l'invention, passant par le plan de coupe P5 représenté sur la figure 3, mais qui se prolonge vers l'arrière au-delà des éléments visibles sur la figure 3.

### DESCRIPTION DETAILLEE

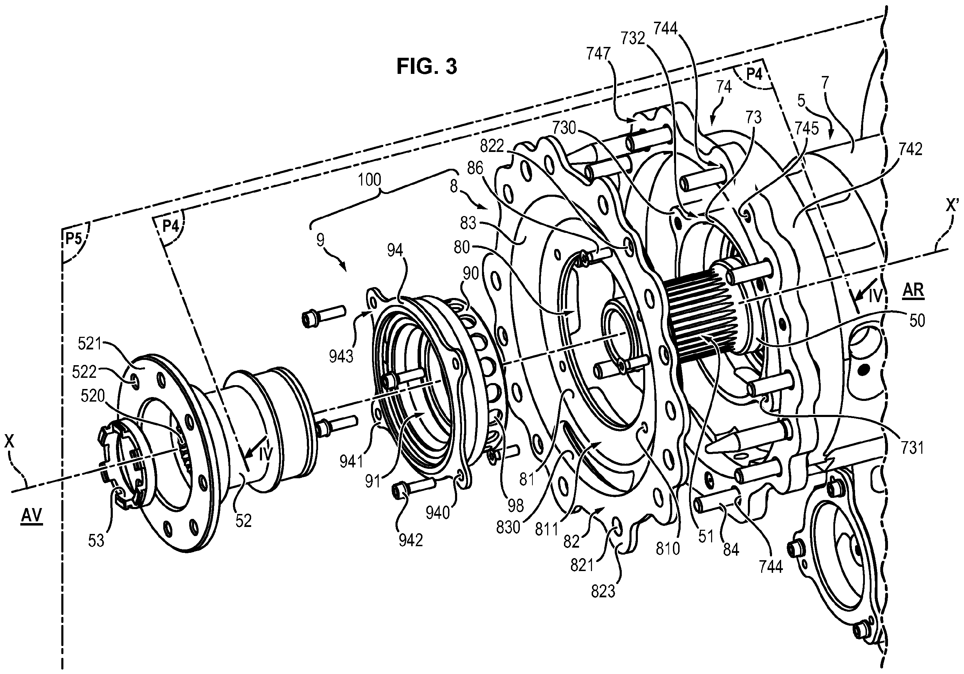

Sur les figures 3 à 5, on peut voir une partie du réducteur 5, plus précisément sa partie avant.

Le réducteur 5 comprend un arbre de sortie 50, entraîné en rotation par un arbre moteur du moteur 4, non visible sur ces figures, et ce, de préférence, via un certain nombre d'engrenages, dont un pignon 54.

L'arbre de sortie 50 s'étend selon un axe longitudinal X-X'. Il présente à la périphérie de son extrémité avant, une série de cannelures 51.

Un manchon de prise de mouvement 52 est monté à l'extrémité avant de l'arbre de sortie 50.

Ce manchon 52 présente intérieurement une série de cannelures intérieures 520, aptes à coopérer avec les cannelures 51.

Le manchon 52 présente en outre à son extrémité avant une collerette avant périphérique 521, percée d'une pluralité d'orifices 522.

Le manchon 52 est accouplé avec l'arbre de sortie 50 de façon que les cannelures 520 et 51 coopèrent. Il est retenu axialement dans cette position par un écrou 53, tel qu'un écrou auto-freiné.

La rotation de l'arbre 50 entraîne la rotation du manchon 52. Ce dernier peut être accouplé avec l'arbre d'entrée de la boîte de transmission principale 6, cet arbre d'entrée étant équipé d'un manchon similaire au manchon 52 mais non représenté sur les figures. Les deux manchons peuvent être assemblés à l'aide de vis disposées au travers des orifices 522.

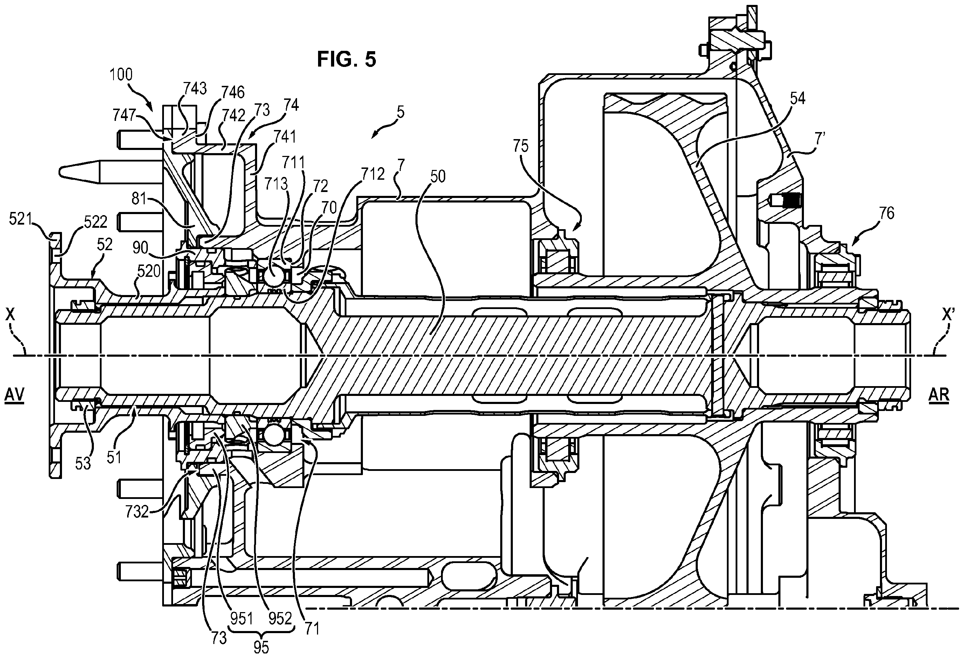

Le réducteur 5 est logé à l'intérieur d'un carter qui le protège, ce carter étant réalisé en deux parties assemblées l'une à l'autre par des moyens de fixation appropriés, à savoir un carter avant 7 qui protège l'extrémité avant du réducteur, située à proximité de la boîte de transmission principale 6 et un carter arrière 7' dont une partie seulement est visible sur la figure 5.

Le carter avant 7 est plus fragile, car de plus faibles dimensions que le carter arrière 7'.

Le carter avant 7 comprend un logement 70 de réception de l'arbre de sortie 50 du réducteur, d'axe longitudinal X-X'. De façon avantageuse, l'extrémité avant de l"arbre de sortie 50 du réducteur y est supportée et guidée en rotation par un palier à roulements dit «palier avant» 71, tel qu'un roulement à billes.

De préférence, le carter avant 7 présente à l'intérieur du logement 70, un épaulement 72 destiné à bloquer axialement vers l'arrière, la bague extérieure 711 dudit palier avant 71.

Ce palier avant 71 comprend également une bague intérieure 712 et une pluralité de billes 713.

Le logement 70 est délimité du côté avant, par un bord annulaire avant 73 dans lequel sont ménagés des orifices taraudés.

De façon avantageuse, ce bord 73 comprend une pluralité d'oreilles 730, par exemple au nombre de quatre, répartie de préférence uniformément à la périphérie du bord 73. Les orifices taraudés 731 sont percés dans ces oreilles 730.

La face plane avant des oreilles 730 et du bord avant 73 est référencée 732.

Le carter avant 7 est en outre muni à sa périphérie d'une collerette 74, dite « collerette avant ».

Dans l'exemple de réalisation représenté sur les figures, la collerette 74 comprend une partie annulaire radiale 741, qui se prolonge vers l'avant par une partie cylindrique 742, puis de nouveau vers l'extérieur par une partie annulaire radiale 743 dite "d'extrémité", (voir figure 5).

La partie cylindrique 742 est coaxiale à l'axe X-X'.

Les deux parties annulaires 741 et 743 s'étendent dans un plan perpendiculaire à l'axe X-X'. La partie annulaire 741 est en retrait vers l'arrière par rapport au bord 73 du logement 70.

La partie d'extrémité 743 de la collerette 74 est percée de part en part de plusieurs orifices, à savoir des orifices débouchants 744, dits "premiers orifices de fixation" et des orifices borgnes 745, dit "seconds orifices de fixation".

De façon avantageuse, et comme cela apparaît mieux sur la figure 3, la périphérie de la partie d'extrémité 743 de la collerette 74 est ondulée de façon à définir des lobes autour des orifices 744, 745 et des zones moins larges entre ces orifices, afin d'alléger la masse du carter avant 7.

La partie d'extrémité 743 présente une face avant plane 747 et une face arrière opposée 746.

De préférence, les deux faces avant 732 du bord 73 et 747 de la collerette 74 s'étendent dans des plans parallèles et de préférence encore distincts, la face 732 étant située plus en arrière par rapport à la face 747.

Par ailleurs, le pignon d'engrenage 54 est emmanché sur l'arbre de sortie 50 qui l'entraîne en rotation. Cet emmanchement est réalisé par exemple à l'aide d'une liaison par cannelures.

Comme on peut le voir sur la figure 5, ce pignon d'engrenage 54 est logé en partie dans le carter avant 7 et en partie dans le carter arrière 7'.

De préférence, ce pignon 54 et la partie de l'arbre de sortie 50 autour de laquelle il est monté sont supportés et guidés en rotation par deux paliers à roulements, dits « paliers médian » 75 et « palier arrière » 76, tels des roulements à billes ou à rouleaux. Le palier médian 75 est monté et retenu à l'intérieur du carter avant 7 et le palier arrière 76 à l'intérieur du carter arrière 7'.

Conformément à l'invention, l'ensemble de transmission 3 comprend un support redondant 100.

Le terme « redondant », désigne le fait que ce support 100 est un double d'une partie du carter avant 7, qui ne joue aucun rôle lorsque le carter avant 7 est entier et non dégradé et qui vient uniquement suppléer le rôle de support structurel du carter avant 7 lorsque ce dernier est endommagé ou rompu.

Un exemple de réalisation de ce support redondant 100 va maintenant être décrit en liaison avec les figures.

Ce support redondant 100 comprend une partie femelle 8 et une partie mâle 9, configurées pour pouvoir être assemblées.

La partie femelle 8 présente une forme générale annulaire, elle est munie d'une ouverture centrale 80, de préférence de même diamètre que l'ouverture du logement de réception 70 au niveau de son bord annulaire avant 73.

De préférence, partie femelle 8 présente la forme générale d'une "assiette creuse" dont le fond est percé par l'ouverture centrale 80, de façon à délimiter une couronne annulaire intérieure plane 81.

La partie femelle 8 comprend également une couronne extérieure périphérique, annulaire, plane 82 et entre les deux, une partie intermédiaire annulaire 83 inclinée vers l'intérieur de l'ouverture centrale 80 et vers l'arrière AR.

La couronne intérieure 81 et la couronne extérieure 82 s'étendent ainsi dans deux plans parallèles perpendiculaires à l'axe longitudinal X-X', et de préférence distincts, la couronne intérieure 81 étant située plus vers l'arrière AR que la couronne extérieure 82.

La couronne intérieure 81 est traversée de part en part par une pluralité d'orifices de fixation 810, par exemple au nombre de quatre.

La couronne intérieure plane 81 présente une face avant 811 et une face arrière opposée 812.

La couronne extérieure 82 est traversée de part en part par une pluralité de premiers orifices de fixation 821 et de deuxièmes orifices de fixation 822.

De façon avantageuse, le bord de la couronne extérieure 82 présente une forme ondulée, de façon à définir des lobes 823 autour des orifices de fixation 821 et 822 et des zones moins larges entre deux de ces orifices successifs, afin d'alléger la masse de la partie femelle 8.

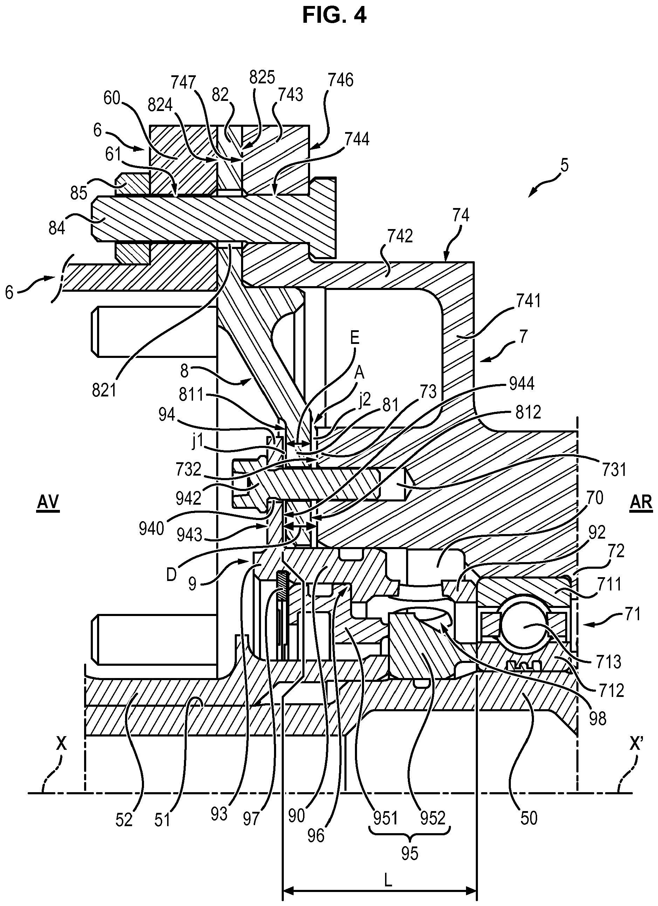

Comme cela apparaît mieux sur la figure 4, la couronne extérieure 82 présente une face plane d'appui avant 824 et une face plane d'appui arrière 825.

Comme on peut le voir sur les figures 3 et 4, les premiers orifices de fixation 821 sont destinés à recevoir des vis 84 qui permettent d'assembler la partie femelle 8 d'une part avec la collerette 74 et d'autre part avec la paroi de la boîte de transmission principale 6.

De préférence, la boite de transmission principale 6 comprend également une collerette 60 autour de son arbre d'entrée, cette collerette 60 étant percée d'orifices 61 destinés à recevoir les vis 84. Ces vis 84 coopèrent avec des écrous 85.

Par ailleurs, et comme on le voit sur la figure 3, les seconds orifices de fixation 822 permettent la réception de vis 86 dont l'extrémité est destinée à être reçue dans les seconds orifices de fixation 745 de la collerette 74 du carter avant 7. Ces vis 86 permettent d'assurer la fixation de la couronne extérieure 82 contre la partie 743 de la collerette 74, notamment pendant le démontage du moteur, lorsque le réducteur est séparé de la boîte de transmission principale 6. Le support redondant reste ainsi bien assemblé sur le réducteur 5.

On notera que la couronne intérieure 81 présente une épaisseur E (voir figure 4).

En outre, de façon avantageuse, la partie intermédiaire inclinée 83 présente une ouverture de drainage 830, ayant de préférence la forme d'une portion d'arc de cercle.

Enfin, de façon avantageuse, la partie femelle 8 est réalisée en aluminium.

La partie mâle 9 (ou « boîtier ») comprend une partie tubulaire 90 délimitant un passage central 91 dont l'axe longitudinal est coaxial à l'axe longitudinal X-X' de l'arbre de sortie 50 du réducteur, lorsque cette partie mâle 9 est montée à l'intérieur du réducteur.

Le diamètre intérieur du passage central 91 est supérieur au diamètre extérieur de l'arbre de sortie 50.

Cette partie mâle 9 présente une extrémité arrière 92 et une extrémité avant 93 (voir figure 4).

L'extrémité avant 93 se prolonge radialement vers l'extérieur par une collerette 94.

Cette collerette 94 est percée par des orifices 940. De façon avantageuse, elle présente plusieurs oreilles 941, par exemple au nombre de quatre, dans lesquelles sont ménagés les orifices 940. Les orifices 940 permettent le passage de vis 942 dont l'extrémité est destinée à être reçue dans les orifices taraudés 731 du carter avant 7 (voir figure 3).

Les vis 942 traversent également les orifices de fixation 810 de la couronne intérieure 81 du support redondant.

La collerette 94 présente une façade plane 943 et une face arrière opposée 944.

La partie mâle 9 est en outre équipé d'un joint tournant 95 comprenant une bague fixe 951 et une bague tournante 952. La bague tournante 952 est emmanchée autour de l'arbre de sortie 50 du réducteur. Elle est retenue axialement vers l'arrière, par la bague intérieure 712 du palier avant 71 et vers l'avant, par l'extrémité arrière de la bride de prise de force 52.

La partie tubulaire de la partie mâle 9 présente intérieurement un épaulement annulaire 96, qui permet de retenir axialement vers l'arrière la bague fixe 951. Celle-ci est en outre maintenue vers l'avant par un anneau élastique 97 reçu dans une gorge annulaire interne de la partie tubulaire 90 de la partie mâle 9.

De façon avantageuse, la partie tubulaire 90 de la partie mâle 9 présente dans sa partie arrière, une pluralité d'orifices de drainage 98, qui s'étendent en regard de la bague tournante 952 du joint tournant 95. Ces orifices 98 permettent d'évacuer l'huile qui pourrait s'écouler hors du joint tournant, en direction du passage central 70.

L'ouverture du drainage 830 permet également cette évacuation de l'huile du joint tournant.

De façon avantageuse, et comme cela apparaît mieux sur la figure 4, le carter avant 7, la partie femelle 8 et la partie mâle 9 sont dimensionnées et configurées, de façon que lorsque la partie mâle 9 est montée sur le carter 7, en étant vissée à l'aide des vis 942, son extrémité arrière 92 vienne en butée contre la bague extérieure 711 du palier avant 71, alors que sa collerette 94 est espacée de la face 732 du rebord 73 du carter 7. Il existe ainsi un espace A entre la face arrière 944 de la collerette 94 et la face avant 732 du carter avant 7.

En d'autres termes, la longueur L entre l'extrémité arrière 92 de la partie mâle 9 et la face intérieure 944 de la collerette 94 est telle qu'il existe toujours cet espace A lorsque l'extrémité arrière 92 de la partie mâle 9 est en butée contre la bague extérieure 711 du palier avant 71.

En outre, de préférence, la partie femelle 8 et le carter avant 7 sont configurés de façon que lorsque la partie femelle 8 est montée, (comme précédemment décrit), de façon que sa couronne périphérique extérieure 82 soit plaquée entre le carter avant 7 et la paroi (collerette 60) de la boîte de transmission principale 6, sa couronne intérieure 81 soit positionnée dans l'espace A et que la distance D entre la face arrière 944 de la collerette 94 et la face avant 732 du bord 73 du carter avant 7 soit supérieure à l'épaisseur E de la couronne intérieure 81.

Ainsi, de préférence, les pièces 7, 8 et 9 sont configurées pour qu'il existe toujours un premier jeu fonctionnel j1 entre la face arrière 944 de la collerette 94 et la face avant 811 de la couronne intérieure 81 et un deuxième jeu fonctionnel j2 entre la face avant 732 du carter avant 7 et la face arrière 812 de la couronne intérieure 81.

En conséquence, lorsque le carter avant 7 n'est pas endommagé, il joue pleinement son rôle de reprise des efforts qui s'exercent au niveau de la liaison entre ce carter 7 et la paroi de la boîte de transmission principale 6 à laquelle il est fixé. Ces efforts sont transmis directement par le carter avant dans le reste de la structure du moteur, sans passer par le support redondant 100.

Inversement, en cas de rupture de carter avant 7 et notamment de sa collerette 74, et plus généralement de sa partie de plus faible diamètre située avant le palier médian 75, le support redondant 100 joue alors pleinement son rôle de support de secours et les efforts sont transmis via ce support 100 au bord 73 du carter avant 7, au palier avant 71, à l'arbre de sortie du réducteur 50, au pignon 54 et aux paliers médian 75 et arrière 76, ces deux paliers étant eux-mêmes fixés à la structure par leurs bagues extérieures respectives.

On a ainsi créé un chemin alternatif ou secondaire de reprise des efforts.

On notera que si la rupture du carter avant 7 s'effectue entre le palier avant 71 et le palier médian 75, le support redondant 100 joue également pleinement son rôle de support de secours et permet la création du chemin alternatif ou secondaire de reprise des efforts.

## Revendications

1. Chaine motrice (3) pour hélicoptère (1), qui comprend au moins un moteur (4) apte à fournir une puissance mécanique, un réducteur (5) et une boite de transmission principale (6) destinée à entrainer en rotation le ou les rotors dudit hélicoptère, le réducteur (5) comprenant un arbre de sortie (50), entrainé en rotation par ledit moteur (4) et accouplé en rotation avec l'arbre d'entrée de ladite boite de transmission principale (6), le réducteur (5) étant logé dans un carter en deux parties assemblées, dites "carter avant" (7) et "carter arrière" (7'), ledit arbre de sortie (50) étant supporté et guidé en rotation par plusieurs paliers à roulements (71, 75, 76), montés dans lesdits carters(7,7'),dont au moins un palier avant (71) monté dans le carter avant (7), **caractérisée en ce qu'elle** comprend un support (100),dit "redondant", **en ce que** ce support redondant (100) est disposé autour de l'arbre de sortie (50) et entre une paroi de ladite boite de transmission principale (6) et l'extrémité avant du carter avant (7), et **en ce que** ce support redondant (100) est configuré, dimensionné et fixé à ladite paroi de la boite de transmission principale (6) et à l'extrémité avant du carter avant (7) de façon à créer, en cas de rupture dudit carter avant (7) devant ledit palier avant (71), un chemin secondaire de reprises des efforts, passant par ce support redondant (100), par l'arbre de sortie (50) du réducteur et par lesdits paliers à roulement (71, 75, 76).

2. Chaine motrice (3) selon la revendication 1, **caractérisée en ce que** le support redondant (100) comprend une partie mâle (9) et une partie femelle (8) configurées pour pouvoir être assemblées, la partie femelle (8) étant munie d'une ouverture centrale (80) bordée par une couronne intérieure (81), cette partie femelle (8) étant disposée autour de l'arbre de sortie (50) de façon que ce dernier traverse ladite ouverture centrale (80), cette partie femelle (8) étant fixée à sa périphérie à ladite paroi de la boite de transmission principale (6) et à l'extrémité avant du carter avant (7), la partie mâle (9) étant disposée autour de l'arbre de sortie (50) du réducteur (5) et étant insérée dans l'ouverture centrale (80) de la partie femelle, les parties mâle (9) et femelle (8) du support redondant et le carter avant (7) étant configurés et dimensionnés de sorte que lorsque la partie mâle (9) est fixée au carter avant (7) à l'aide de vis de fixation (942) traversant ladite partie femelle (8), elle soit en butée contre la bague extérieure (711) de l'un des paliers à roulements (71), dit "palier avant", et à ce qu'il existe un premier jeu fonctionnel (j1) entre la partie mâle (9) et la partie femelle (8) du support redondant (100) et un second jeu fonctionnel (j2) entre la partie femelle (8) et ledit carter avant (7).

3. Chaine motrice (3) selon la revendication 2, **caractérisée en ce que** le carter avant (7) est muni d'un logement de réception (70) dudit arbre de sortie (50), ce logement (70) étant bordé à son extrémité avant par un bord annulaire avant (73) percé d'orifices taraudés (731), **en ce que** la partie mâle (9) du support redondant (100) comprend un manchon tubulaire (90) qui se prolonge à son extrémité avant par une collerette périphérique (94), dite "collerette avant", percée de plusieurs orifices de fixation (940), **en ce que** la couronne intérieure (81) de la partie femelle (8) est munie d'orifices de fixation (810), **en ce que** la partie mâle (9) du support redondant (100) est disposée de façon que l'arbre de sortie (50) du réducteur traverse le passage central (91) de son manchon tubulaire (90) et que ce dernier traverse l'ouverture centrale (80) du support redondant (100) et soit logé en partie dans le logement de réception (70) du carter avant, et **en ce que** ladite partie mâle (9) est fixée au carter avant à l'aide de vis de fixation (942) traversant les orifices de fixation (940) de la partie mâle (9), les orifices de fixation (810) ménagés dans la couronne intérieure (81) et les orifices taraudés (731) du carter avant (7).

4. Chaine motrice (3) selon l'une des revendications précédentes, **caractérisée en ce qu'**un pignon d'engrenage (54) est emmanché sur l'arbre de sortie (50) qui l'entraine en rotation, **en ce que** ce pignon d'engrenage (54) est logé en partie dans le carter avant (7) et en partie dans le carter arrière (7'), **en ce que** ledit pignon d'engrenage (54) et ledit arbre de sortie (50) sont supportés et guidés en rotation par un palier à roulements (75), dit "médian", monté dans le carter avant (7) et par un palier à roulements (76), dit "arrière", monté dans le carter arrière (7') et **en ce qu'**en cas de rupture du carter avant (7), le chemin secondaire de reprise des efforts passe par le support redondant (100), l'arbre de sortie (50) et lesdits paliers à roulements (71, 75, 76).

5. Chaine motrice (3) selon l'une des revendications précédentes, **caractérisée en ce que** le support redondant (100) comprend une partie femelle (8) qui est de forme annulaire et qui comprend une couronne extérieure périphérique (82), percée d'une première série d'orifices de fixation (821), **en ce que** le carter avant (7) comprend une collerette avant (74) avec une partie annulaire radiale plane (743) percée de premiers orifices de fixation (744), et **en ce que** la partie femelle (8) du support redondant (100) est fixée par vissage à ladite partie annulaire radiale plane (743) de la collerette avant (74) et à la paroi de la boite de transmission principale (6), à l'aide de vis (84) et d'écrous (85), lesdites vis (84) traversant la paroi de la boite de transmission principale (6), lesdits premiers orifices de fixation (821) de la couronne extérieure (82) de la partie femelle (8) et lesdits premiers orifices de fixation (744) de la partie annulaire radiale plane (743) de la collerette avant (74) du carter avant (7).

6. Chaine motrice (3) selon les revendications 2 et 5, **caractérisée en ce que** la couronne intérieure (81) et la couronne extérieure (82) de la partie femelle (8) du support redondant (100) sont planes, s'étendent dans deux plans parallèles distincts et sont jointes l'une à l'autre par une partie intermédiaire annulaire (83) inclinée vers l'intérieur de son ouverture centrale (80).

7. Chaine motrice (3) selon la revendication 6, **caractérisée en ce que** la partie intermédiaire annulaire inclinée (83) de ladite partie femelle (8) est munie d'une ouverture (830) de drainage d'huile.

8. Chaine motrice (3) selon l'une des revendications 6 ou 7, **caractérisée en ce que** la couronne extérieure (82) de la partie femelle (8) du support redondant (100) est munie de seconds orifices de fixation (822) permettant le passage de vis de fixation (86) sur la collerette avant (74) du carter avant.

9. Chaine motrice (3) selon la revendication 3 ou selon la revendication 3 et l'une des revendications 4 à 8, **caractérisée en ce que** la partie mâle (9) du support redondant (100) est munie intérieurement d'un joint tournant (95) dont la bague fixe (951) est fixée à l'intérieur du passage central (91) de la partie mâle (9) et dont la bague tournante (952) est solidaire en rotation de l'arbre de sortie (50) du réducteur.

10. Chaine motrice (3) selon la revendication 9, **caractérisée en ce que** l'arbre de sortie (50) du réducteur est muni d'un manchon de prise de mouvement (52) emmanché autour de l'extrémité libre de cet arbre de sortie et **en ce que** la bague tournante (952) du joint tournant (95) est montée entre la bague intérieure (712) du palier avant (71) et l'extrémité arrière dudit manchon de prise de mouvement (52).

11. Chaine motrice (3) selon la revendication 9 ou 10, **caractérisée en ce que** l'extrémité arrière du manchon tubulaire (90) de la partie mâle (9) est percée d'une pluralité d'orifices de drainage (98) qui se trouvent en regard de la bague tournante (952) du joint tournant (95) lorsque la partie mâle (9) est fixée sur le carter avant (7).

12. Hélicoptère (1), **caractérisé en ce qu'**il est équipé de la chaine motrice (3) selon l'une des revendications précédentes.

## Patentansprüche

1. Antriebsstrang (3) für Hubschrauber (1), der mindestens einen Motor (4), der imstande ist, eine mechanische Leistung bereitzustellen, ein Reduziergetriebe (5) und ein Hauptantriebsgetriebe (6), das bestimmt ist, den oder die Rotoren des Hubschraubers rotatorisch anzutreiben, umfasst, wobei das Reduziergetriebe (5) eine Ausgangswelle (50) umfasst, die von dem Motor (4) rotatorisch angetrieben wird und mit der Eingangswelle des Hauptantriebsgetriebes (6) rotatorisch gekoppelt ist, wobei das Reduziergetriebe (5) in einem Gehäuse aus zwei verbundenen Teilen, bezeichnet als "vorderes Gehäuse" (7) und "hinteres Gehäuse" (7'), untergebracht ist, wobei die Ausgangswelle (50) von mehreren Wälzlagern (71, 75, 76) gestützt und rotatorisch geführt wird, die in den Gehäusen (7, 7') angebracht sind, wovon mindestens ein vorderes Lager (71) in dem vorderen Gehäuse (7) angebracht ist, **dadurch gekennzeichnet, dass** er eine als "redundant" bezeichnete Stütze (100) umfasst, dass diese redundante Stütze (100) um die Ausgangswelle (50) und zwischen einer Wand des Hauptantriebsgetriebes (6) und dem vorderen Ende des vorderen Gehäuses (7) angeordnet ist und dass diese redundante Stütze (100) konfiguriert, bemessen und an der Wand des Hauptantriebsgetriebes (6) und am vorderen Ende des vorderen Gehäuses (7) derart befestigt ist, dass bei einem Bruch des vorderen Gehäuses (7) vor dem vorderen Lager (71) ein sekundärer Kraftübernahmeweg entsteht, der durch diese redundante Stütze (100), durch die Ausgangswelle (50) des Reduziergetriebes und durch die Wälzlager (71, 75, 76) verläuft.

2. Antriebsstrang (3) nach Anspruch 1, **dadurch gekennzeichnet, dass** die redundante Stütze (100) einen männlichen Teil (9) und einen weiblichen Teil (8) umfasst, die konfiguriert sind, um verbunden zu sein, wobei der weibliche Teil (8) mit einer zentralen Öffnung (80), gesäumt von einem inneren Kranz (81), ausgestattet ist, wobei dieser weibliche Teil (8) um die Ausgangswelle (50) derart angeordnet ist, dass diese die zentrale Öffnung (80) durchquert, wobei dieser weibliche Teil (8) an seinem Umfang an der Wand des Hauptantriebsgetriebes (6) und am vorderen Ende des vorderen Gehäuses (7) befestigt ist, wobei der männliche Teil (9) um die Ausgangswelle (50) des Reduziergetriebes (5) angeordnet und in die zentrale Öffnung (80) des weiblichen Teils eingesetzt ist, wobei der männliche (9) und weibliche (8) Teil der redundanten Stütze und das vordere Gehäuse (7) derart konfiguriert und bemessen sind, dass, wenn der männliche Teil (9) am vorderen Gehäuse (7) mit Hilfe von Befestigungsschrauben (942) befestigt ist, die den weiblichen Teil (8) durchqueren, er an dem Außenring (711) von einem der Wälzlager (71), bezeichnet als "vorderes Lager", im Anschlag ist, und dass es ein erstes Funktionsspiel (j1) zwischen dem männlichen Teil (9) und dem weiblichen Teil (8) der redundanten Stütze (100) und ein zweites Funktionsspiel (j2) zwischen dem weiblichen Teil (8) und dem vorderen Gehäuse (7) gibt.

3. Antriebsstrang (3) nach Anspruch 2, **dadurch gekennzeichnet, dass** das vordere Gehäuse (7) mit einer Empfangsaufnahme (70) der Ausgangswelle (50) ausgestattet ist, wobei diese Aufnahme (70) an ihrem vorderen Ende durch einen vorderen ringförmigen Rand (73), durchbrochen von gewindeten Öffnungen (731), gesäumt ist, dass der männliche Teil (9) der redundanten Stütze (100) eine rohrförmige Hülse (90) umfasst, die sich an ihrem vorderen Ende durch einen peripheren Kragen (94), bezeichnet als "vorderer Kragen", durchbrochen von mehreren Befestigungsöffnungen (940), verlängert, dass der innere Kranz (81) des weiblichen Teils (8) mit Befestigungsöffnungen (810) ausgestattet ist, dass der männliche Teil (9) der redundanten Stütze (100) derart angeordnet ist, dass die Ausgangswelle (50) des Reduziergetriebes den zentralen Durchgang (91) seiner rohrförmigen Hülse (90) durchquert und dass diese die zentrale Öffnung (80) der redundanten Stütze (100) durchquert und zum Teil in der Empfangsaufnahme (70) des vorderen Gehäuses aufgenommen ist, und dass der männliche Teil (9) am vorderen Gehäuse mit Hilfe von Befestigungsschrauben (942) befestigt ist, die die Befestigungsöffnungen (940) des männlichen Teils (9), die in dem inneren Kranz (81) ausgebildeten Befestigungsöffnungen (810) und die gewindeten Öffnungen (731) des vorderen Gehäuses (7) durchqueren.

4. Antriebsstrang (3) nach einem der vorangehenden Ansprüche, **dadurch gekennzeichnet, dass** ein Ritzelzahnrad (54) auf die Ausgangswelle (50) gepresst ist, die es rotierend antreibt, dass dieses Ritzelzahnrad (54) zum Teil in dem vorderen Gehäuse (7) und zum Teil in dem hinteren Gehäuse (7') aufgenommen ist, dass das Ritzelzahnrad (54) und die Ausgangswelle (50) von einem als "mittleres" bezeichneten Wälzlager (75), das in dem vorderen Gehäuse (7) angebracht ist, und von einem als "hinteres" bezeichneten Wälzlager (76), das in dem hinteren Gehäuse (7') angebracht ist, gestützt und rotatorisch geführt werden, und dass bei einem Bruch des vorderen Gehäuses (7) der sekundäre Kraftübernahmeweg durch die redundante Stütze (100), die Ausgangswelle (50) und die Wälzlager (71, 75, 76) verläuft.

5. Antriebsstrang (3) nach einem der vorangehenden Ansprüche, **dadurch gekennzeichnet, dass** die redundante Stütze (100) einen weiblichen Teil (8) umfasst, der ringförmig ist und der einen peripheren äußeren Kranz (82) umfasst, durchbrochen von einer ersten Reihe von Befestigungsöffnungen (821), dass das vordere Gehäuse (7) einen vorderen Kragen (74) mit einem ebenen radialen ringförmigen Teil (743) umfasst, der von ersten Befestigungsöffnungen (744) durchbrochen ist, und dass der weibliche Teil (8) der redundanten Stütze (100) durch Verschrauben an dem ebenen radialen ringförmigen Teil (743) des vorderen Kragens (74) und an der Wand des Hauptantriebsgetriebes (6) mit Hilfe von Schrauben (84) und Muttern (85) befestigt ist, wobei die Schrauben (84) die Wand des Hauptantriebsgetriebes (6), die ersten Befestigungsöffnungen (821) des äußeren Kranzes (82) des weiblichen Teils (8) und die ersten Befestigungsöffnungen (744) des ebenen radialen ringförmigen Teils (743) des vorderen Kragens (74) des vorderen Gehäuses (7) durchqueren.

6. Antriebsstrang (3) nach den Ansprüchen 2 und 5, **dadurch gekennzeichnet, dass** der innere Kranz (81) und der äußere Kranz (82) des weiblichen Teils (8) der redundanten Stütze (100) eben sind, sich in zwei unterschiedlichen parallelen Ebenen erstrecken und durch einen ringförmigen Übergangsteil (83) miteinander verbunden sind, der von seiner zentralen Öffnung (80) aus nach innen geneigt ist.

7. Antriebsstrang (3) nach Anspruch 6, **dadurch gekennzeichnet, dass** der geneigte ringförmige Übergangsteil (83) des weiblichen Teils (8) mit einer Öldrainageöffnung (830) ausgestattet ist.

8. Antriebsstrang (3) nach einem der Ansprüche 6 oder 7, **dadurch gekennzeichnet, dass** der äußere Kranz (82) des weiblichen Teils (8) der redundanten Stütze (100) mit zweiten Befestigungsöffnungen (822) ausgestattet ist, die den Durchgang von Befestigungsschrauben (86) auf dem vorderen Kragen (74) des vorderen Gehäuses erlauben.

9. Antriebsstrang (3) nach Anspruch 3 oder nach Anspruch 3 und einem der Ansprüche 4 bis 8, **dadurch gekennzeichnet, dass** der männliche Teil (9) der redundanten Stütze (100) innen mit einem Drehstück (95) ausgestattet ist, dessen fester Ring (951) im Inneren des zentralen Durchgangs (91) des männlichen Teils (9) befestigt ist und dessen drehender Ring (952) mit der Ausgangswelle (50) des Reduziergetriebes rotatorisch fest verbunden ist.

10. Antriebsstrang (3) nach Anspruch 9, **dadurch gekennzeichnet, dass** die Ausgangswelle (50) des Reduziergetriebes mit einer Bewegungsübernahmehülse (52) ausgestattet ist, die um das freie Ende dieser Ausgangswelle gepresst ist und dass der drehende Ring (952) des Drehstücks (95) zwischen dem inneren Ring (712) des vorderen Lagers (71) und dem hinteren Ende der Bewegungsübernahmehülse (52) angebracht ist.

11. Antriebsstrang (3) nach Anspruch 9 oder 10, **dadurch gekennzeichnet, dass** das hintere Ende der rohrförmige Hülsen (90) des männlichen Teils (9) von einer Vielzahl von Drainageöffnungen (98) durchbrochen ist, die sich gegenüber dem drehenden Ring (952) des Drehstücks (95) befinden, wenn der männliche Teil (9) auf dem vorderen Gehäuse (7) befestigt ist.

12. Hubschrauber (1), **dadurch gekennzeichnet, dass** er mit dem Antriebsstrang (3) nach einem der vorangehenden Ansprüche ausgestattet ist.

## Claims

1. A drive train (3) for helicopters (1), which comprises at least one engine (4) capable of supplying mechanical power, a reduction gear (5) and a main gearbox (6) designed to drive in rotation the rotor(s) of said helicopter, the reduction gear (5) comprising an output shaft (50), driven in rotation by said engine (4) and coupled in rotation with the input shaft of said main gearbox (6), the reduction gear (5) being housed in a housing in two assembled parts, called the "front housing" (7) and the "rear housing" (7'), said output shaft (50) being supported and guided in rotation by several rolling bearings (71, 75, 76) mounted in said housings (7, 7'), with at least a front bearing (71) mounted in the front housing (7), **characterized in that it** comprises a mount (100), designated "redundant", and **in that** this redundant mount (100) is disposed around the output shaft (50) and between a wall of said main gearbox (6) and the front end of the front housing (7), and **in that** this redundant mount is configured, dimensioned and attached to said wall of the main gearbox (6) and to the front end of the front housing (7) so as to create, in the event of rupture of said front housing (7) in front of said front bearing (71), a secondary load absorbing path passing through this redundant mount (100), through the output shaft (50) of the reduction gear and through said rolling bearings (71, 75, 76).

2. The drive train (3) according to claim 1, **characterized in that** the redundant mount (100) comprises a male portion (9) and a female portion (8) configured so that they can be assembled, the female portion (8) being provided with a central opening (80) surrounded by an interior ring (81), this female portion (8) being disposed around the output shaft (50) so that the latter passes through said central opening (80), this female portion (8) being attached at its periphery to said wall of the main gearbox (6) and to the front end of the front housing (7), the male portion (9) being disposed around the output shaft (50) of the reduction gear (5) and being inserted in the central opening (80) of the female portion, the male (9) and female (8) portions of the redundant mount and the front housing (7) being configured and dimensioned so that when the male portion (9) is attached to the front housing (7) using attachment bolts (942) passing through said female portion (8), it is in abutment against the exterior ring (711) of one of the rolling bearings (71), called the "front bearing," and **in that** there exists a first functional clearance (j1) between the male portion (9) and the female portion (8) of the redundant mount (100) and a second functional clearance (j2) between the female portion (8) and said front housing (7).

3. The drive train (3) according to claim 2, **characterized in that** the front housing (7) is provided with a reception recess (70) for said output shaft (50), this recess (70) being surrounded at its front end by an annular front edge (73) drilled with threaded openings (731), **in that** the male portion (9) of the redundant mount (100) comprises a tubular sleeve (90) which is extended at its front end by a peripheral collar (94) called the "front collar," drilled with several attachment openings (940), **in that** the interior ring (81) of the female portion (8) is provided with attachment openings (810), **in that** the male portion (9) of the redundant mount (100) is disposed so that the output shaft (50) of the reduction gear passes through the central passage (91) of its tubular sleeve (90) and **in that** the latter passes through the central opening (80) of the redundant mount (100) and is housed in part in the reception recess (70) of the front housing and **in that** said male portion (9) is attached to the front housing using attachment bolts (942) passing through the attachment openings (940) of the male portion (9), the attachment openings (810) provided in the interior ring (81) and the threaded openings (731) of the front housing (7).

4. The drive train (3) according to one of the preceding claims, **characterized in that** a pinion gear (54) is interference fitted to the output shaft (50) which drives it in rotation, and **in that** the pinion gear (54) is housed in part in the front housing (7) and in part in the rear housing (7'), **in that** said pinion gear (54) and said output shaft (50) are supported and guided in rotation by a rolling bearing (75) called "median," mounted in the front housing (7) and by a rolling bearing (76) called "rear," mounted in the rear housing (7') and **in that** in the event of a rupture of the front housing (7), the secondary load absorbing path passes through the redundant mount (100), the output shaft (50) and said rolling bearings (71, 75, 76).

5. The drive train (3) according to one of the preceding claims, **characterized in that** the redundant mount (100) comprises a female portion (8) which has an annular shape and which comprises an exterior peripheral ring (82), drilled with a first series of attachment openings (821), **in that** the front housing (7) comprises a front collar (74) with a flat radial annular portion (743) drilled with first attachment openings (744), and **in that** the female portion (8) of the redundant mount (100) is attached by screwing to said flat radial annular portion (743) of the front collar (74) and to the wall of the main gearbox (6), using bolts (84) and nuts (85), said bolts (84) passing through the wall of the main gearbox (6), said first attachment openings (821) of the exterior ring (82) of the female portion (8) and said first attachment openings (744) of the flat radial annular portion (743) of the front collar (74) of the front housing (7).

6. The drive train (3) according to claims 2 and 5, **characterized in that** the interior ring (81) and the exterior ring (82) of the female portion (8) of the redundant mount (100) are flat, extend in two distinct parallel planes and are joined to one another by an intermediate annular portion (83) inclined toward the interior of its central opening (80).

7. The drive train (3) according to claim 6, **characterized in that** the inclined intermediate annular portion (83) of said female portion (8) is provided with an oil drainage opening (830).

8. The drive train (3) according to one of claims 6 or 7, **characterized in that** the exterior ring (82) of the female portion (8) of the redundant mount (100) is provided with second attachment openings (822) allowing the passage of attachment bolts (86) on the front collar (74) of the front housing.

9. The drive train (3) according to claim 3 or according to claim 3 and one of claims 4 to 8, **characterized in that** the male portion (9) of the redundant mount (100) is provided interiorly with a rotating seal (95) of which the fixed ring (951) is attached to the interior of the central passage (91) of the male portion (9) and of which the rotating ring (952) is integral in rotation with the output shaft (50) of the reduction gear.

10. The drive train (3) according to claim 9, **characterized in that** the output shaft (50) of the reduction gear is provided with a motion take-up sleeve (52) interference fitted around the free end of this output shaft and **in that** the rotating ring (952) of the rotating seal (95) is mounted between the interior ring (712) of the front bearing (71) and the rear end of said motion take-up sleeve (52).

11. The drive train (3) according to claim 9 or 10, **characterized in that** the rear end of the tubular sleeve (90) of the male portion (9) is drilled with a plurality of drainage openings (98) which are located facing the rotating ring (952) of the rotating seal (95) when the male portion (9) is attached to the front housing (7).

12. A helicopter (1), **characterized in that** it is equipped with the drive train (3) according to one of the preceding claims.
